# EUROPÄISCHE PATENTSCHRIFT

(11) **EP 1 936 259 B1**
(45) Veröffentlichungstag und Bekanntmachung des Hinweises auf die Patenterteilung: **13.05.2009**
(21) Anmeldenummer: 07450187.5
(22) Anmeldetag: 22.10.2007
(51) Int. Cl.: F21S 8/10, F21V 19/00, B60Q 1/04, F21Y 101/02, F21K 7/00, H01L 23/32

(54) **Montagesystem zur Montage von Leuchtdioden in einem Gehäuse einer Lichteinheit oder eines Fahrzeugscheinwerfers**
Mounting system for mounting LEDs in the casing of a lamp unit or vehicle headlamp
Système de montage destiné au montage de diodes luminescentes dans un boîtier d'une unité d'éclairage ou un phare de véhicule

(30) Priorität: 21.12.2006 AT 21222006
(43) Veröffentlichungstag der Anmeldung: 25.06.2008
(73) Patentinhaber: Zizala Lichtsysteme GmbH, A-3250 Wieselburg (AT)
(72) Erfinder: Lahner Markus, 3100 St.Pölten (AT); Rudolf Leonhartsberger, 3393 Zelking (AT); Erik Pirringer, 3250 Wieselburg (AT); Günther Krenn, 3071 Böheimkirchen (AT)
(74) Vertreter: Patentanwaltskanzlei Matschnig & Forsthuber OG

(56) Entgegenhaltungen:
- EP-A- 1 353 120
- EP-A- 1 632 711
- WO-A-20/04055433
- DE-A1-4102004 017 45
- US-A1- 2006 215 416

## Beschreibung

Die Erfindung betrifft ein Montagesystem zur Montage von einer oder mehreren Leuchtdioden in einem Gehäuse einer Lichteinheit oder eines Fahrzeugscheinwerfers, wobei das Montagesystem ein Montageelement umfasst, und wobei die zumindest eine Leuchtdiode auf dem Montageelement angeordnet ist, und weiters zumindest ein optisches Element auf dem Montageelement angeordnet ist, und Licht von der zumindest einen Leuchtdiode über das zumindest eine optische Element in den Außenraum der Lichteinheit bzw. des Fahrzeugscheinwerfers emittiert wird.

Herkömmliche Scheinwerfer für Kraftfahrzeuge sind mit Lichtquellen, wie Halogen- und Xenonlampen bestückt. Zur Halterung dieser Lichtquellen ist eine Fassung vorgesehen, welche ein einfaches Wechseln der Lichtquelle ermöglicht. Optische Einstellungen an Reflektoren, Linsen etc., welche mit der Lichtquelle zusammenwirken, werden durch den Wechsel der Lichtquelle nicht beeinflusst, da die Lichtquelle mit ihren Toleranzen auf den Scheinwerfer abgestimmt ist.

Die Verwendung von Leuchtdioden stellt im Gegensatz dazu wesentlich höhere Anforderungen an die Toleranzen und die Einbausituation als dies bei herkömmlichen Scheinwerfern der Fall ist.

Aus diesem Grund werden die Leuchtdioden direkt auf einem Montageelement angeordnet, auf welchem alle optisch notwendigen Bauteile optimal zu der oder den Leuchtdioden positioniert werden. Auf dem Montageelement sind die optischen Bauteile zueinander richtig positioniert und das Montageelement muss dann beim Einbau in den Scheinwerfer noch justiert werden, damit die gesetzlichen Erfordernisse an das Lichtbild erfüllt werden können.

Ein solches Justieren des Montagelementes ist zeitaufwändig und umständlich und ist insbesondere bei der Verwendung von Infrarot-Leuchtdioden mit einem erhöhten Aufwand verbunden.

Außerdem muss bei einem Wechsel einer Leuchtdiode, die mit dem Wechsel des Montageelementes verbunden ist, das neue Montageelement wiederum justiert werden.

Es ist eine Aufgabe der Erfindung, ein Wechseln von einer oder mehreren Leuchtdioden zu ermögliche, ohne dass die lichttechnischen Einstellungen neuerlich vorgenommen werden müssen.

Diese Aufgabe wird mit einem eingangs erwähnten System dadurch gelöst, dass erfindungsgemäß
a) das zumindest eine optische Element um zumindest eine Verschwenkachse verschwenkbar ist,
b) und zum Verschwenken des zumindest einen optischen Elementes dieses mit zumindest einem Einstellelement derart gekoppelt ist, dass eine Translationsbewegung des zumindest einen Einstellelementes in eine Verschwenkbewegung des zumindest einen optischen Elementes um seine Verschwenkachse umgesetzt wird,
wobei das zumindest eine optische Element und das Einstellelement über ein erstes Kupplungselement, welches fest mit dem optischen Element verbunden ist, und ein zweites Kupplungselement, welches fest mit dem Einstellelement verbunden ist, miteinander gekoppelt sind,
die Kopplung von erstem und zweitem Kupplungselement lösbar ist, und das zumindest eine Einstellelement in oder an dem Gehäuse der Lichteinheit bzw. des Fahrzeugscheinwerfers in einer Richtung vor und zurück längsverschiebbar, in den beiden Raumachsen normal auf die Verschieberichtung aber unbeweglich angeordnet und in einer vorgebbaren Position, unabhängig von dem zumindest einen optischen Element, fixierbar ist, derart, dass bei entferntem Montageelement das zweite Kupplungselement in einer Position verbleibt, welche der gekoppelten Position entspricht

Bei einem Wechsel des Montageelementes verbleibt das Einstellelement exakt in jener Position, in welcher es sich bei eingesetztem Montageelement befand. Es werden somit die optischen Einstellungen für das optische Element "gespeichert", und bei einem Einsetzen eines neuen Montageelementes übernimmt das optische Element auf dem neuen Montageelement die optischen Einstellungen von dem Einstellelement.

Die "Speicherung" der optischen Einstellungen erfolgt dabei besonders zweckmäßig mit einem Montagesystem, bei welchem an dem Gehäuse eine von der Gehäuseaußenseite zugängliche Einstellschraube gelagert ist, welche mit dem Einstellelement derart zusammenwirkt, dass bei einem Verdrehen der Einstellschraube das Einstellelement in Längsrichtung verschoben wird und das Einstellelement in der gewünschten Position fixierbar ist.

Die Einstellschraube ist in dem Gehäuse verdrehsicher gelagert, da sie ohne Werkzeug nicht zugänglich ist. Mit einem entsprechenden Werkzeug kann die Einstellschraube dann verstellt werden, wodurch sich das Einstellelement entsprechend bewegt und die gewünschte Position einnimmt.

Auch andere Fixierelemente als eine Einstellschraube sind denkbar, z.B. ein Klemmelement, welches durch entsprechende Krafteinwirkung mit einem Werkzeug in einer Führung verschoben werden kann, durch die Klemmwirkung sonst aber hält. Die Verwendung einer Einstellschraube hat aber den Vorteil, dass mit ihr besonders exakt die Position eingestellt werden kann und in beide Verschieberichtung des Einstellelementes die Verstellung gleich einfach erfolgt.

Um ein besonders einfaches Lösen und wieder miteinander Verbinden zu erlauben, ist weiters vorgesehen, dass eines der beiden Kupplungselement eine Aufnahmeöffnung aufweist, in welche das andere Kupplungselement lösbar einsetzbar ist, wobei in eingesetztem Zustand die Verschiebebewegung des einen Kupplungselementes spielfrei in eine Verschwenkbewegung des anderen Kupplungselementes umgesetzt wird.

Außerdem werden im eingesetzten Zustand die optischen Einstellungen des Einstellelementes auf diese Weise exakt auf das optische Element übertragen.

Eine konkrete vorteilhafte Ausgestaltungsform der Erfindung zeichnet sich dadurch aus, dass das eine Kupplungselement eine Welle ist, welche parallel zu der Verschwenkachse verläuft, und die Aufnahmeöffnung des anderen Kupplungselementes ein diese Welle zumindest abschnittsweise am Umfang umgreifende Ausgestaltung aufweist.

Diese Variante ist stabil und lässt sich einfach und kostengünstig realisieren.

Ein besonders stabiles spielfreies Zusammenwirken der Bauteile ergibt sich, wenn das eine Kupplungselement einen Kugelkopf aufweist, und das andere Kupplungselement eine diesen Kugelkopf zumindest teilweise umgreifende Aufnahmeöffnung aufweist.

Damit die Translationsbewegung des Einstellelementes in eine Verschwenkbewegung des optischen Elementes umgesetzt wird, ist weiters vorgesehen, dass das erste Kupplungselement außerhalb der Verschwenkachse des optischen Elementes angeordnet ist.

Damit beim Einsetzen eines Montageelementes die beiden Kupplungselemente einfach in die richtige Position zueinander gelangen, ist weiters vorgesehen, dass das Kupplungselement mit der Aufnahmeöffnung eine Fangvorrichtung zum Einfangen des anderen Kupplungselementes beim Zusammenbau des Montagesystems aufweist. Auch wenn beim Einsetzen des Montageelementes das optische Element sich in einer Extremposition außerhalb der gewünschten Position befindet, ist es doch einfach möglich, die beiden Kupplungselemente einander anzunähern und diese miteinander zu koppeln.

Damit eine gleichmäßige Bewegung und ein stabiler Sitz des Einstellelementes in dem Gehäuse gewährleistet ist, ist weiters vorgesehen, dass an dem Einstellelement ein oder mehrere Führungselemente angeformt sind, mittels welcher das Einstellelement in einer Führung in oder an dem Gehäuse verschiebbar gelagert ist.

Außerdem kann auch noch vorgesehen sein, dass zumindest ein Führungselement an dem Einstellelement elastisch angeformt ist oder elastisch ausgebildet ist. Dadurch wird das Einstellelement mit den Führungselementen in die Führung, z.B. eine Führungsschiene gedrückt, wodurch eine spielfreie Lagerung gegeben ist und ein Wackeln verhindert ist.

Beispielsweise ist das zumindest eine Führungselement als Führungsblättchen ausgebildet.

Das optische Element ist bei einer konkreten Ausführungsform ein Reflektor, z.B. ein Hohlspiegel oder eine ebener Spiegel.

Außerdem kann vorgesehen sein, dass das optische Element zumindest eine Linse umfasst.

Zweckmäßig kann es auch sein, wenn in Lichtaustrittsrichtung vor dem optischen Element eine Linse oder ein Streuglas angeordnet ist.

Um eine einfache Montage zu erlauben, ist vorgesehen, dass die Verschieberichtung des zumindest einen Einstellelementes im Wesentlichen normal auf die Montagerichtung des Montageelementes steht. Bei dieser Ausgestaltung ist das Einstellelement bei einem Einsetzen des Montageelementes nicht im Weg und zwischen den Kupplungselementen kann einfach der notwendige Kontakt hergestellt werden.

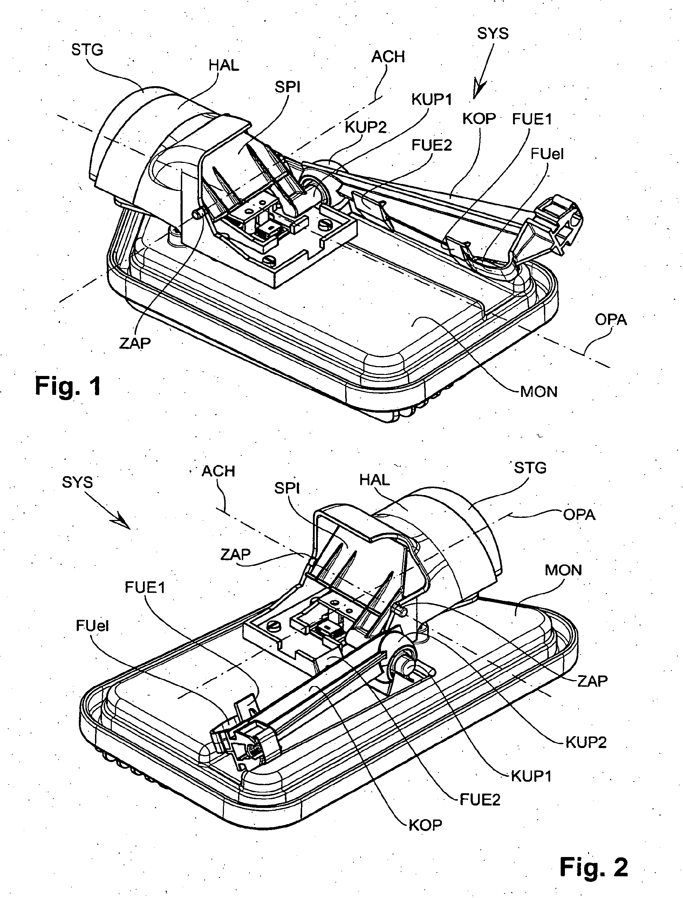

Im Folgenden ist die Erfindung an Hand der Zeichnung näher erläutert. In dieser zeigt
Fig. 1 eine erste perspektivische Darstellung eines erfindungsgemäßen Systems,
Fig. 2 eine zweite perspektivische Ansicht des Systems aus Figur 1,

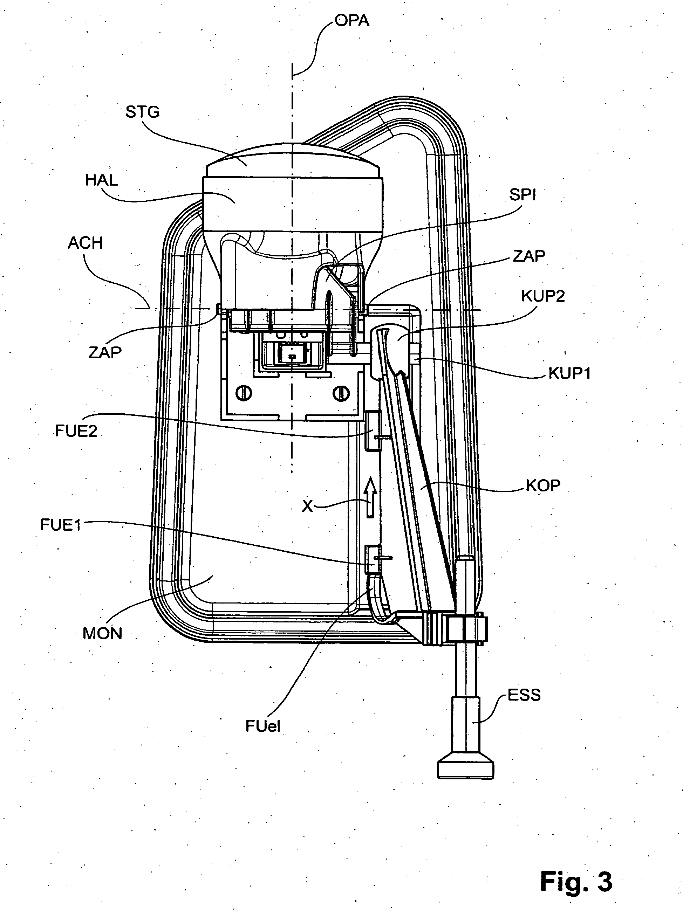

Fig. 3 eine Draufsicht auf ein System aus Figur 1 und 2 entgegen der Montagerichtung des Montagelementes,
Fig. 4 eine erste Seitenansicht des erfindungsgemäßen Systems,
Fig. 5 eine zweite Seitenansicht des erfindungsgemäßen Systems von der in Figur 4 gezeigten Seite gegenüberliegenden Seite,

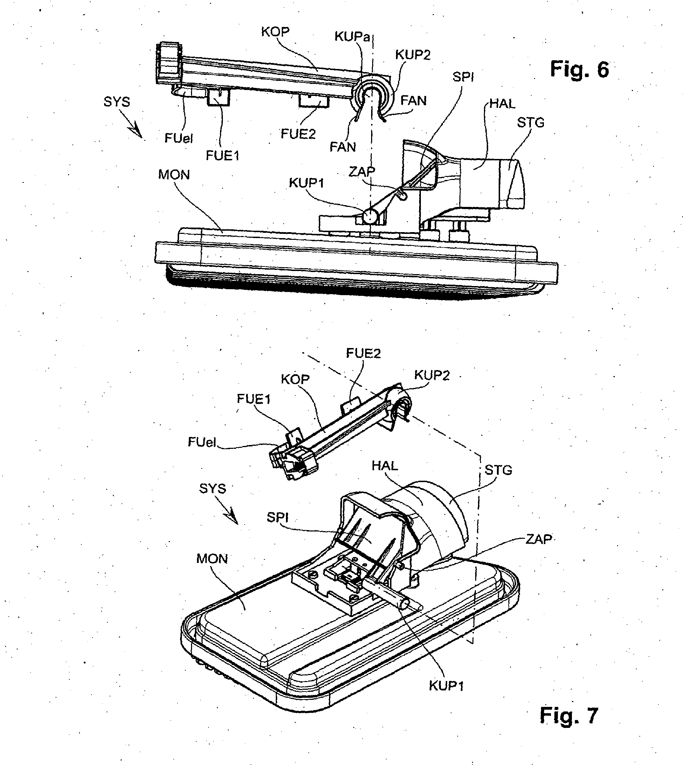

Fig. 6 das Montageelement und das davon getrennte Einstellelement in einer Seitenansicht entsprechend Figur 5 ohne Gehäuse und ohne Einstellschraube, und
Fig. 7 die Darstellung aus Figur 6 in einer perspektivischen Ansicht.

Die Figuren zeigen ein Montagesystem SYS entsprechend der Erfindung zur Montage von einer oder mehreren Leuchtdioden LIQ in einem Gehäuse GEH einer Lichteinheit oder eines Fahrzeugscheinwerfers.

Das Montagesystem SYS umfasst ein Montageelement MON, das als Deckel ausgebildet ist, mit dem das Gehäuse GEH durch Aufsetzen verschlossen wird. Die Verbindung und gegebenenfalls Abdichtung zwischen Gehäuse GEH und Montageelement MON erfolgt dabei auf bekannte Art und Weise und wird hier nicht näher erläutert.

Die zumindest eine Leuchtdiode LIQ ist auf einem in der Zeichnung nicht dargestellten LED-Print angeordnet, welcher auf dem Montageelement MON platziert ist.

Außerdem ist auf dem Montageelement MON ein optisches Element SPI angeordnet, und Licht von der zumindest einen Leuchtdiode LIQ wird über das optische Element SPI in den Außenraum der Lichteinheit bzw. des Fahrzeugscheinwerfers emittiert.

In der gezeigten Darstellung ist das optische Element ein ebener Spiegel SPI. Der Spiegel SPI ist von einer Halterung HAL gehalten, welche weiters in dieser Darstellung noch eine weitere Optik STG in Form eines Streuglases (mit oder ohne optische Elemente) oder eine Linse hält. Die Halterung HAL ist auf dem Montageelement MON befestigt.

Bei dem Spiegel kann es sich in einer anderen Ausgestaltung natürlich auch um einen gekrümmten Spiegel (Reflektor) handeln, oder um eine Linse/Streuglas bzw. um ein kombiniertes optisches Element aus Spiegel (eben oder gekrümmt) und Linse bzw. Streuglas.

Mit dem Bezugszeichen X ist die optische Achse des Systems bezeichnet, Y bezeichnet die Montagerichtung, in welcher das Montageelement MON auf das Gehäuse GEH aufgesetzt wird.

Das optische Element in Form eines Spiegels SPI ist mittels Zapfen ZAP um eine Verschwenkachse ACH an der Halterung HAL verschwenkbar gelagert. Zum Verschwenken des optischen Elementes SPI dieses mit einem Einstellelement KOP derart gekoppelt, dass eine Translationsbewegung des zumindest einen Einstellelementes KOP in eine Verschwenkbewegung des optischen Elementes SPI um seine Verschwenkachse ACH umgesetzt wird.

Einfach und zuverlässig lässt sich das erfindungsgemäße System SYS wie gezeigt mit nur einem Einstellelement KOP realisieren. Natürlich können aber auch mehrere solche Einstellelemente derart miteinander gekoppelt sein, dass der erfindungsgemäße Effekt erzielt wird; dies kann günstig sein, wenn der Angriffspunkt für die Einstellschraube ungünstig liegt. In der Regel ist es aber besser, wenn lediglich ein Einstellelement wie gezeigt verwendet wird.

Das optische Element SPI und das Einstellelement KOP sind dabei über ein erstes Kupplungselement KUP1, welches fest mit dem optischen Element SPI verbunden ist, und ein zweites Kupplungselement KUP2, welches fest mit dem Einstellelement KOP verbunden ist, miteinander gekoppelt.

Die Kopplung von erstem und zweitem Kupplungselement KUP1, KUP2 ist lösbar ist. Weiters ist das Einstellelement KOP in dem Gehäuse GEH der Lichteinheit bzw. des Fahrzeugscheinwerfers in einer Richtung X vor und zurück längsverschiebbar, in den beiden Raumachsen normal auf die Verschieberichtung X aber unbeweglich angeordnet und in einer vorgebbaren Position, unabhängig von dem zumindest einen optischen Element SPI, fixierbar. In dieser Position verbleibt das Einstellelement KOP auch, wenn das Montageelement MON entfernt wird. Dadurch befindet sich auch das zweite Kupplungselement KUP2 in einer Position, welcher der gekoppelten Position entspricht, wodurch die optischen Einstellungen "gespeichert" werden und auf ein neu eingesetztes optisches Element übertragen werden.

Bei einem Wechsel des Montageelementes verbleibt somit das Einstellelement KOP exakt in jener Position, in welcher es sich bei eingesetztem Montageelement MON befand. Es werden somit die optischen Einstellungen für das optische Element "gespeichert", und bei einem Einsetzen eines neuen Montageelementes übernimmt das optische Element auf dem neuen Montageelement die optischen Einstellungen von dem Einstellelement.

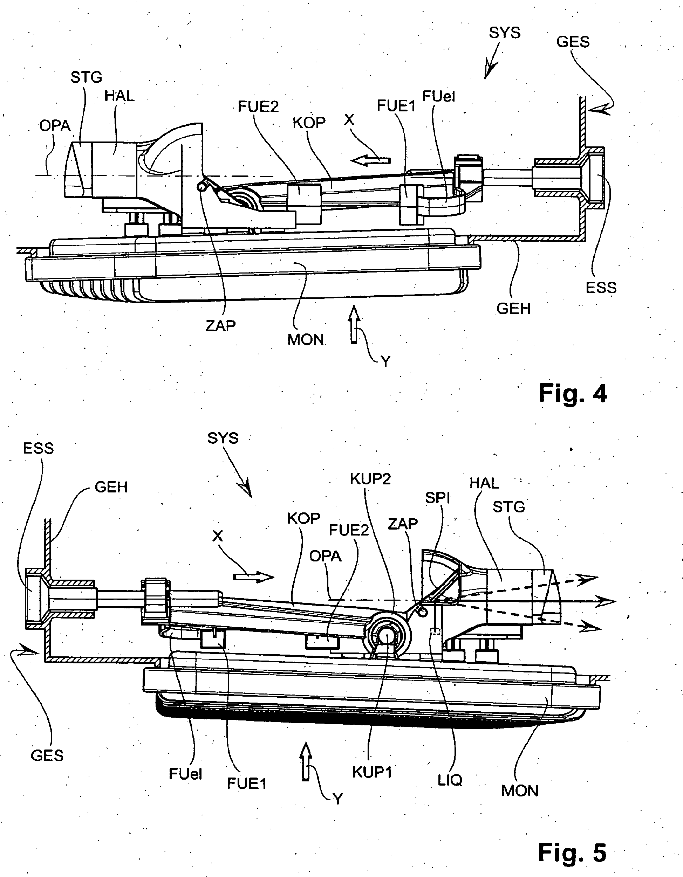

Die "Speicherung" der optischen Einstellungen erfolgt bei einer besonders zweckmäßigen Ausführungsform wie in den Figuren gezeigt mit einem Montagesystem SYS, bei welchem an dem Gehäuse GEH eine von der Gehäuseaußenseite GES zugängliche Einstellschraube ESS gelagert ist (Figur 4 und 5), welche mit dem Einstellelement KOP derart zusammenwirkt, dass bei einem Verdrehen der Einstellschraube ESS das Einstellelement KOP in Längsrichtung je nach Drehrichtung vor oder zurück parallel zu der optischen Achse OPA verschoben wird und das Einstellelement KOP in der gewünschten Position fixierbar ist.

Die Einstellschraube ESS ist in dem Gehäuse GEH verdrehsicher gelagert, da sie ohne Werkzeug nacht zugänglich ist. Mit einem entsprechenden Werkzeug kann die Einstellschraube ESS dann verstellt werden, wodurch sich das Einstellelement KOP entsprechend bewegt und die gewünschte Position einnimmt.

Um ein besonders einfaches Lösen und wieder miteinander Verbinden zu erlauben, ist weiters vorgesehen, dass eines der beiden Kupplungselement KUP2 eine Aufnahmeöffnung KUPa aufweist, in welche das andere Kupplungselement KUP1 lösbar einsetzbar ist, wobei in eingesetztem Zustand die Verschiebebewegung des einen Kupplungselementes KUP2 spielfrei in eine Verschwenkbewegung des anderen Kupplungselementes KUP1 umgesetzt wird.

In dem gezeigten Beispiel weist dabei jenes Kupplungselement KUP2, welches an dem Einstellelement KOP angeordnet ist, die Aufnahmeöffnung KUPa auf.

Das weitere Kupplungselement KUP1 ist eine Welle, welche parallel zu der Verschwenkachse ACH verläuft, und die Aufnahmeöffnung KUPa des Kupplungselementes KUP2 an dem Einstellelement KOP weist eine diese Welle zumindest abschnittsweise am Umfang umgreifende Gestalt auf.

Damit die Translationsbewegung des Einstellelementes KOP in eine Verschwenkbewegung des optischen Elementes SPI umgesetzt wird, ist sind die Kupplungselemente KUP1, KUP2 im zusammengesetzten Zustand außerhalb der Verschwenkachse ACH des optischen Elementes SPI angeordnet.

Damit beim Einsetzen eines Montageelementes die beiden Kupplungselemente einfach in die richtige Position zueinander gelangen, ist weiters vorgesehen, dass das Kupplungselement KUP2 mit der Aufnahmeöffnung KUPa eine Fangvorrichtung FAN zum Einfangen des anderen Kupplungselementes KUP1 beim Zusammenbau des Montagesystems SYS aufweist. Auch wenn beim Einsetzen des Montageelementes MON das optische Element SPI sich in einer Extremposition außerhalb der gewünschten Position befindet, ist es dadurch doch einfach möglich, die beiden Kupplungselemente KUP1, KUP2 einander anzunähern und diese miteinander zu koppeln.

Damit eine gleichmäßige Bewegung und ein stabiler Sitz des Einstellelementes in dem Gehäuse gewährleistet ist, sind an dem Einstellelement KOP zwei Führungselemente FUE1, FUE2 angeformt, mittels welcher das Einstellelement KOP in einer Führung (nicht dargestellt) in dem Gehäuse GEH verschiebbar gelagert ist.

Das dem Kupplungselement KUP2 abgewandte Führungselement FUE1 ist an dem Einstellelement KOP über einen elastischen Abschnitt FUel elastisch angeformt. Dadurch wird das Einstellelement KOP mit den Führungselementen FUE1, FUE2 in die Führung, z.B. eine Führungsschiene gedrückt, wodurch eine spielfreie Lagerung gegeben ist und ein Wackeln verhindert ist.

Die Führungselemente FUE1, FUE2 selbst sind als Führungsblättchen ausgebildet.

Schließlich sei noch angemerkt, dass es von Vorteil ist, wenn die Verschieberichtung X des zumindest einen Einstellelementes KOP im Wesentlichen normal auf die Montagerichtung Y des Montageelementes MON steht. Bei dieser Ausgestaltung ist das Einstellelement bei einem Einsetzen des Montageelementes nicht im Weg und zwischen den Kupplungselementen kann einfach der notwendige Kontakt hergestellt werden.

## Patentansprüche

1. Montagesystem zur Montage von einer oder mehreren Leuchtdioden (LIQ) in einem Gehäuse (GEH) einer Lichteinheit oder eines Fahrzeugscheinwerfers, wobei das Montagesystem (SYS) ein Montageelement (MON) umfasst, und wobei die zumindest eine Leuchtdiode (LIQ) auf dem Montageelement (MON) angeordnet ist, und weiters zumindest ein optisches Element (SPI) auf dem Montageelement (MON) angeordnet ist, und Licht von der zumindest einen Leuchtdiode (LIQ) über das zumindest eine optische Element (SPI) in den Außenraum der Lichteinheit bzw. des Fahrzeugscheinwerfers emittiert wird,
**dadurch gekennzeichnet, dass**
a) das zumindest eine optische Element (SPI) um zumindest eine Verschwenkachse (ACH) verschwenkbar ist,
b) und zum Verschwenken des zumindest einen optischen Elementes (SPI) dieses mit zumindest einem Einstellelement (KOP) derart gekoppelt ist, dass eine Translationsbewegung des zumindest einen Einstellelementes (KOP) in eine Verschwenkbewegung des zumindest einen optischen Elementes (SPI) um seine Verschwenkachse (ACH) umgesetzt wird,
wobei das zumindest eine optische Element (SPI) und das zumindest eine Einstellelement (KOP) über ein erstes Kupplungselement (KUP1), welches fest mit dem zumindest einen optischen Element (SPI) verbunden ist, und ein zweites Kupplungselement (KUP2), welches fest mit dem zumindest einen Einstellelement (KOP) verbunden ist, miteinander gekoppelt sind, und wobei
die Kopplung von erstem und zweitem Kupplungselement (KUP1, KUP2) lösbar ist, und das zumindest eine Einstellelement (KOP) in oder an dem Gehäuse (GEH) der Lichteinheit bzw. des Fahrzeugscheinwerfers in einer Richtung (X) vor und zurück längsverschiebbar, in den beiden Raumachsen normal auf die Verschieberichtung (X) aber unbeweglich angeordnet und in einer vorgebbaren Position, unabhängig von dem zumindest einen optischen Element (SPI), fixierbar ist, derart, dass bei entferntem Montageelement (MON) das zweite Kupplungselement (KUP2) in einer Position verbleibt, welche der gekoppelten Position entspricht.

2. Montagesystem nach Anspruch 1, **dadurch gekennzeichnet, dass** an dem Gehäuse (GEH) eine von der Gehäuseaußenseite (GES) zugängliche Einstellschraube (ESS) gelagert ist, welche mit dem zumindest einen Einstellelement (KOP) derart zusammenwirkt, dass bei einem Verdrehen der Einstellschraube (ESS) das zumindest eine Einstellelement (KOP) in Längsrichtung verschoben wird und das zumindest eine Einstellelement (KOP) in der gewünschten Position fixierbar ist.

3. Montagesystem nach Anspruch 1 oder 2, **dadurch gekennzeichnet, dass** das erste/zweite Kupplungselement (KUP2) eine Aufnahmeöffnung (KUPa) aufweist, in welche das zweite/erste Kupplungselement (KUP1) lösbar einsetzbar ist, wobei in eingesetztem Zustand die Verschiebebewegung des ersten/zweiten Kupplungselementes (KUP2) spielfrei in eine Verschwenkbewegung des zweiten/ersten Kupplungselementes (KUP1) umgesetzt wird.

4. Montagesystem nach einem der Ansprüche 1 bis 3, **dadurch gekennzeichnet, dass** das erste/zweite Kupplungselement (KUP1) eine Welle ist, welche parallel zu der Verschwenkachse (ACH) verläuft, und die Aufnahmeöfnung (KUPa) des zweiten/ersten Kupplungselementes (KUP2) ein diese Welle zumindest abschnittsweise am Umfang umgreifende Ausgestaltung aufweist.

5. Montagesystem nach einem der Ansprüche 1 bis 3, **dadurch gekennzeichnet, dass** das erste/zweite Kupplungselement einen Kugelkopf aufweist, und das zweite/erste Kupplungselement eine diesen Kugelkopf zumindest teilweise umgreifende Aufnahmeöffnung aufweist.

6. Montagesystem nach einem der Ansprüche 1 bis 5, **dadurch gekennzeichnet, dass** das erste Kupplungselement (KUP1) außerhalb der Verschwenkachse (ACH) des zumindest einen optischen Elementes (SPI) angeordnet ist.

7. Montagesystem nach einem der Ansprüche 1 bis 6, **dadurch gekennzeichnet, dass** das erste/zweite Kupplungselement (KUP2) mit der Aufnahmeöffnung (KUPa) eine Fangvorrichtung (FAN) zum Einfangen des zweiten/ersten Kupplungselementes (KUP1) beim Zusammenbau des Montagesystems (SYS) aufweist.

8. Montagesystem nach einem der Ansprüche 1 bis 7, **dadurch gekennzeichnet, dass** an dem zumindest einen Einstellelement (KOP) ein oder mehrere Führungselemente (FUE1, FUE2) angeformt sind, mittels welcher das zumindest eine Einstellelement (KOP) in einer Führung in oder an dem Gehäuse (GEH) verschiebbar gelagert ist.

9. Montagesystem nach Anspruch 8, **dadurch gekennzeichnet, dass** zumindest ein Führungselement (FUE1) an dem zumindest einen Einstellelement (KOP) elastisch angeformt ist oder elastisch ausgebildet ist.

10. Montageelement nach Anspruch 8 oder 9, **dadurch gekennzeichnet, dass** das zumindest ein Führungselement (FUE1, FUE2) als Führungsplättchen ausgebildet ist.

11. Montageelement nach einem der Ansprüche 1 bis 10, **dadurch gekennzeichnet, dass** das zumindest eine optische Element (SPI) einen Reflektor, z.B. einen Hohlspiegel oder einen ebenen Spiegel umfasst.

12. Montagesystem nach einem der Ansprüche 1 bis 11, **dadurch gekennzeichnet, dass** das zumindest eine optische Element (SPI) zumindest eine Linse umfasst.

13. Montagesystem nach einem der Ansprüche 1 bis 12, **dadurch gekennzeichnet, dass** in Lichtaustrittsrichtung vor dem zumindest einen optischen Element (SPI) eine Linse oder ein Streuglas angeordnet ist.

14. Montagesystem nach einem der Ansprüche 1 bis 13, **dadurch gekennzeichnet, dass** die Verschieberichtung (X) des zumindest einen Einstellelementes (KOP) im Wesentlichen normal auf die Montagerichtung (Y) des Montageelementes (MON) steht.

## Claims

1. An assembly system for setting up one or more light emitting diodes (LIQ) in a housing (GEH) of a lighting unit or vehicle headlamp, wherein the assembly system (SYS) comprises a mounting element (MON) and said at least one light emitting diode (LIQ) is disposed on the mounting element (MON), and in addition at least one optical element (SPI) is disposed on the mounting element (MON) and light from said at least one light-emitting diode (LIQ) is emitted through said at least one optical element (SPI) into the outer space of the lighting unit or vehicle headlamp,
**characterized in that**
a) said at least one optical element (SPI) can be swiveled about at least one swivel axis (ACH),
b) and, for the purpose of swiveling said at least one optical element (SPI), the latter is coupled to at least one adjusting element (KOP) in such a manner that translational motion of said at least one adjusting element (KOP) is converted to rotational motion of said at least one optical element (SPI) about its swivel axis (ACH),
wherein said at least one optical element (SPI) and said at least one adjusting element (KOP) are interconnected by a first coupling element (KUP1), which is firmly connected to said at least one optical element (SPI), and a second coupling element (KUP2), which is firmly connected to said at least one adjusting element (KOP), and
wherein said first and second coupling elements (KUP1, KUP2) can be disconnected, and said at least one adjusting element (KOP) can be mounted in or on said housing (GEH) of said lighting unit or vehicle headlamp so as to be longitudinally displaceable forwardly and rearwardly in a direction (X) but non-displaceable in the two spatial axes normal to the direction of displacement (X) and can be fixed in a predefined position, independently of said at least one optical element (SPI), such that, when said mounting element (MON) has been removed, said second coupling element (KUP2) remains in a position which corresponds to the coupled position.

2. The assembly system as defined in claim 1, **characterized in that** on said housing (GEH) there is provided a set screw (ESS) that is accessible from the side of said housing (GES) and that cooperates with said at least one adjusting element (KOP) in such a manner that turning said set screw (ESS) causes said at least one adjusting element (KOP) to be displaced in the longitudinal direction and said at least one adjusting element (KOP) to be capable of being fixed in the desired position.

3. The assembly system as defined in claim 1 or claim 2, **characterized in that** said first/second coupling element (KUP2) has an accommodating hole (KUPa), into which said second/first coupling element (KUP1) can be releasably inserted, and in the installed state the shift movement of said first/second coupling element (KUP2) is converted without backlash to rotational movement of said second/first coupling element (KUP1).

4. The assembly system as defined in any one of claims 1 to 3, **characterized in that** said first/second coupling element (KUP1) is a shaft, which extends parallel to said swivel axis (ACH), and said accommodating hole (KUPa) of said second/first coupling element (KUP2) is designed so as to engage around at least a portion of said shaft at its periphery.

5. The assembly system as defined in any one of claims 1 to 3, **characterized in that** said first/second coupling element has a spherical head, and said second/first coupling element has an accommodating hole which at least partially engages around said spherical head.

6. The assembly system as defined in any one of claims 1 to 5, **characterized in that** said first coupling element (KUP1) is disposed off the swivel axis (ACH) of said at least one optical element (SPI).

7. The assembly system as defined in any one of claims 1 to 6, wherein the first/second coupling element (KUP2) comprising said accommodating hole (KUPa) has a safety catch (FAN) for the purpose of capturing the second/first coupling element (KUP1) during set up of said assembly system (SYS).

8. The assembly system as defined in any one of claims 1 to 7, **characterized in that** on said at least one adjusting element (KOP) there are molded one or more guide elements (FUE1, FUE2), by means of which said at least one adjusting element (KOP) is displaceably mounted in a guide in or on said housing (GEH).

9. The assembly system as defined in claim 8, **characterized in that** at least one guide element (FUE1) is of a resilient nature or is resiliently molded on said at least one adjusting element (KOP).

10. The mounting element as defined in claim 8 or claim 9, **characterized in that** said at least one guide element (FUE1, FUE2) is in the form of a small guide plate.

11. The mounting element as defined in any one of claims 1 to 10, **characterized in that** said at least one optical element (SPI) comprises a reflector, for example a concave mirror or a plane mirror.

12. The assembly system as defined in any one of claims 1 to 11, **characterized in that** said at least one optical element (SPI) comprises at least one lens.

13. The assembly system as defined in any one of claims 1 to 12, **characterized in that,** as regarded in the direction of light emission, a lens or diffusing glass is disposed in front of said at least one optical element (SPI).

14. The assembly system as defined in any one of claims 1 to 13, **characterized in that** the direction of displacement (X) of said at least one adjusting element (KOP) is substantially normal to the mounting direction (Y) of said mounting element (MON).

## Revendications

1. Système de montage destiné au montage d'une ou de plusieurs diodes luminescentes (LIQ) dans un boîtier (GEH) d'une unité d'éclairage ou d'un phare de véhicule, le système de montage (SYS) comportant un élément de montage (MON), et la au moins une diode luminescente (LIQ) étant disposée sur l'élément de montage (MON), et également au moins un élément optique (SPI) étant disposé sur l'élément de montage (MON), et de la lumière étant émise par ladite au moins une diode luminescente (LIQ) par ledit au moins un élément optique (SPI) dans l'espace extérieur de l'unité d'éclairage ou du phare de véhicule.
**caractérisé en ce que**
a) ledit au moins un élément optique (SPI) peut basculer autour du moins un axe de pivotement (ACH),
b) et pour le basculement dudit au moins un élément optique (SPI), celui-ci est couplé avec au moins un élément de réglage (KOP) de telle sorte qu'un mouvement de translation dudit au moins un élément de réglage (KOP) est converti en un mouvement de basculement dudit au moins un élément optique (SPI) autour de son axe de pivotement (ACH),
ledit au moins un élément optique (SPI) et ledit au moins un élément de réglage (KOP) étant couplés l'un avec l'autre au moyen d'un premier élément d'accouplement (KUP1), qui est relié de façon fixe à au moins un élément optique (SPI), et d'un second élément d'accouplement (KUP2), qui est relié à au moins un élément de réglage (KOP), et
l'accouplement du premier et du second éléments d'accouplement (KUP1, KUP2) étant amovible, et ledit au moins un élément de réglage (KOP) pouvant coulisser dans la longueur en avant et en arrière dans une direction (X) dans ou sur le boîtier (GEH) de l'unité d'éclairage ou du phare de véhicule, mais étant disposé de façon immobile dans les deux axes d'espace perpendiculairement à la direction de déplacement (X) et pouvant être fixé dans une position prédéfinissable, indépendamment dudit au moins un élément optique (SPI), de telle sorte que, lorsque l'élément de montage (MON) est enlevé, le second élément d'accouplement (KUP2) reste dans une position qui correspond à la position couplée.

2. Système de montage selon la revendication 1, **caractérisé en ce que** sur le boîtier (GEH) est montée une vis de réglage (ESS) accessible par le côté extérieur du boîtier (GES), laquelle vis coopère avec ledit au moins un élément de réglage (KOP) de telle sorte que, lors d'une rotation de la vis de réglage (ESS), ledit au moins un élément de réglage (KOP) est déplacé dans la direction longitudinale et ledit au moins un élément de réglage (KOP) peut être fixé dans la position souhaitée.

3. Système de montage selon la revendication 1 ou 2, **caractérisé en ce que** le premier/second élément d'accouplement (KUP2) présente une ouverture de logement (KUPa) dans laquelle le second/premier élément d'accouplement (KUP1) peut être inséré de façon amovible, le mouvement de déplacement du premier/second élément d'accouplement (KUP2) étant converti sans jeu en un mouvement de basculement du second/premier élément d'accouplement (KUP1) dans l'état inséré.

4. Système de montage selon l'une quelconque des revendications 1 à 3, **caractérisé en ce que** le premier/second élément d'accouplement (KUP1) est un arbre qui est agencé parallèlement à l'axe de pivotement (ACH), et l'ouverture de logement (KUPa) du second/premier élément d'accouplement (KUP2) présente une configuration entourant cet arbre au moins par endroits sur le pourtour.

5. Système de montage selon l'une quelconque des revendications 1 à 3, **caractérisé en ce que** le premier/second élément d'accouplement présente une tête sphérique, et le second/premier élément d'accouplement présente une ouverture de logement entourant au moins partiellement cette tête sphérique.

6. Système de montage selon l'une quelconque des revendications 1 à 5, **caractérisé en ce que** le premier élément d'accouplement (KUP1) est disposé à l'extérieur de l'axe de pivotement (ACH) dudit au moins un élément optique (SPI).

7. Système de montage selon l'une quelconque des revendications 1 à 6, **caractérisé en ce que** le premier/second élément d'accouplement (KUP2) avec l'ouverture de logement (KUPa) présente un dispositif de retenue (FAN) pour l'accrochage du second/premier élément d'accouplement (KUP1) lors de l'assemblage du système de montage (SYS).

8. Système de montage selon l'une quelconque des revendications 1 à 7, **caractérisé en ce que** sur ledit au moins un élément de réglage (KOP) sont formés un ou plusieurs éléments de guidage (FUE1, FUE2) au moyen desquels ledit au moins un élément de réglage (KOP) est logé de façon coulissante dans un guide dans ou sur le boîtier (GEH).

9. Système de montage selon la revendication 8, **caractérisé en ce que** au moins un élément de guidage (FUE1) est formé de façon élastique ou est réalisé de façon élastique sur ledit au moins un élément de réglage (KOP).

10. Elément de montage selon la revendication 8 ou 9, **caractérisé en ce que** ledit au moins un élément de guidage (FUE1, FUE2) est conçu sous forme de plaquette de guidage.

11. Elément de montage selon l'une quelconque des revendications 1 à 10, **caractérisé en ce que** ledit au moins un élément optique (SPI) comprend un réflecteur, par exemple un miroir creux ou un miroir plan.

12. Système de montage selon l'une quelconque des revendications 1 à 11, **caractérisé en ce que** ledit au moins un élément optique (SPI) comprend au moins une lentille.

13. Système de montage selon l'une quelconque des revendications 1 à 12, **caractérisé en ce qu'**une lentille ou un verre diffuseur est disposé, dans la direction de sortie de lumière, devant ledit au moins un élément optique (SPI).

14. Système de montage selon l'une quelconque des revendications 1 à 13, **caractérisé en ce que** la direction de déplacement (X) dudit au moins un élément de montage (KOP) est sensiblement perpendiculaire à la direction de montage (Y) de l'élément de montage (MON).
